# FASCICULE DE BREVET EUROPEEN

(11) **EP 1 077 355 B1**
(45) Date de publication et mention de la délivrance du brevet: **18.02.2004**
(21) Numéro de dépôt: 00402184.6
(22) Date de dépôt: 28.07.2000
(51) Int. Cl.: F25D 25/04, F25D 3/11, A23L 3/375, A23L 3/36

(54) **Installation et procédé de traitement de produits**
Einrichtung und Verfahren zur Behandlung von Produkten
Installation and procedure for treating products

(30) Priorité: 18.08.1999 FR 9910604
(43) Date de publication de la demande: 21.02.2001
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Delpuech, Bernard, 78190 Maurepas (FR)
(74) Mandataire: Mellul-Bendelac, Sylvie Lisette

(56) Documents cités:
- EP-A- 0 459 272
- DE-A- 2 822 782
- FR-A- 1 472 259
- GB-A- 2 071 296
- US-A- 3 051 289
- US-A- 3 782 527
- US-A- 4 354 549
- US-A- 5 317 818
- US-A- 5 732 762
- US-A- 5 816 067

## Description

La présente invention concerne une installation pour le traitement de produits (que ce soit en froid ou à chaud), notamment alimentaires, du type comprenant une chambre de traitement comportant une ouverture d'entrée et une ouverture de sortie, un dispositif convoyeur principal, qui présente une direction de convoyage principal, ce dispositif convoyeur étant situé sur au moins une partie de sa longueur à l'intérieur de la chambre de traitement, ainsi que deux convoyeurs auxiliaires comportant une direction de convoyage auxiliaire perpendiculaire à la direction de convoyage principal et qui se raccordent à une extrémité du dispositif convoyeur principal.

Le document FR-A-1 472 259 illustre l'état antérieur de la technique de telles installations.

Ce document divulgue une installation conforme au préambule de la revendication 1.

L'invention concerne en outre un procédé de traitement de produits notamment alimentaires en utilisant une telle installation.

L'invention s'applique notamment aux installations de refroidissement de produits alimentaires, et en particulier à leur croûtage.

On connaît des appareils de refroidissement notamment surfacique (appareils de croûtage) de produits alimentaires comprenant essentiellement une chambre de refroidissement qui possède deux portes à ses extrémités opposées, et un dispositif convoyeur principal dont la partie médiane est située à l'intérieur de cette chambre de refroidissement. Les deux portes et les ouvertures respectives ont une surface seulement légèrement plus petite que la section transversale de la chambre. Le convoyeur sert à l'alimentation et à l'évacuation de la chambre de refroidissement. Pendant le trajet à l'intérieur de la chambre, les produits restent sur le convoyeur.

Deux convoyeurs auxiliaires extérieurs à la chambre de refroidissement sont généralement raccordés aux extrémités du convoyeur principal.

Ces convoyeurs, respectivement d'amenée et d'évacuation, présentent une direction de convoyage perpendiculaire à la direction de convoyage principal du dispositif convoyeur principal.

Les produits à refroidir sont amenés par le convoyeur d'amenée extérieur et transférés latéralement sur le convoyeur principal. Les deux portes s'ouvrent simultanément et un produit à refroidir entre dans la chambre pendant qu'un autre produit déjà refroidi sort de la chambre et est transféré sur le convoyeur d'évacuation. Ensuite les portes sont fermées simultanément et le cyde de refroidissement est redémarré.

De tels appareils sont relativement encombrants en longueur, ce qui peut poser des problèmes d'implantation dans les ateliers de conditionnement de produits alimentaires. En outre, la perte de gaz froids présents dans l'appareil est importante à cause de la surface importante des portes, ainsi que de l'effet cheminée engendré par l'alignement des ouvertures de portes, lesquelles s'ouvrent simultanément.

Si l'on a insisté dans ce qui précède sur le cas des appareils de refroidissement de produits alimentaires, on sait que ce type de structure d'appareils de traitement, en froid ou en température, comprenant un convoyeur principal et des convoyeurs auxiliaires (latéraux) d'amenée et d'extraction des produits se retrouve de façon beaucoup plus générale dans un grand nombre d'applications, parmi lesquelles on peut citer les fours de cuisson, les fours de traitement thermique ou encore de brasage.

L'invention a pour but de fournir une installation pour le traitement de produits, qui soit plus compacte et qui ait un rendement thermique augmenté.

A cet effet, l'invention a pour objet une installation telle que revendiquée en revendication 1 ci-aprés.

Suivant des modes particuliers de réalisation, l'installation suivant l'invention peut comporter une ou plusieurs des caractéristiques suivantes.
- les cames et/ou les galets sont en matériau polyéthylène de haute densité ;
- l'ouverture d'entrée ou de sortie correspondant au(x)dit(s) convoyeur(s) auxiliaire(s) présente un contour légèrement plus grand et similaire à la section des produits dans la direction de convoyage auxiliaire correspondante ;
- la chambre de traitement comporte des moyens d'adaptation du contour de l'ouverture d'entrée ou de sortie à la section des produits dans la direction de convoyage auxiliaire correspondante ;
- la chambre de traitement est une chambre de refroidissement ;
- la chambre de traitement est une chambre de croûtage ;
- la chambre de traitement est une enceinte de traitement thermique.

L'invention a également pour objet un procédé de traitement utilisant une installation telle que définie ci-dessus.

Suivant un premier aspect, ce procédé est un procédé de refroidissement, et se caractérise en ce qu'il comprend le cyde d'étapes suivant :
(a) on réalise un refroidissement accéléré dans la chambre de refroidissement au moyen d'un fluide cryogénique,
(b) quand un premier produit se trouvant dans la chambre de refroidissement devant l'ouverture de sortie a terminé son refroidissement, on arrête le refroidissement accéléré et on sort le premier produit de la chambre de refroidissement,
(c) ensuite, on fait avancer d'un cran les produits restant dans la chambre, et on introduit un deuxième produit à refroidir dans la chambre de refroidissement, par l'ouverture d'entrée,
(d) on redémarre le refroidissement accéléré, et,
(e) on recommence le cycle de refroidissement.

Suivant un deuxième aspect, le procédé suivant l'invention est un procédé de refroidissement, et se caractérise en ce qu'il comprend le cycle d'étapes suivantes :
(a) on réalise un refroidissement accéléré dans la chambre de refroidissement au moyen d'un fluide cryogénique,
(b) quand le produit qui se trouve sur ladite partie du convoyeur de sortie a terminé son refroidissement, on arrête le refroidissement accéléré,
(c) on sort ce produit au moyen du convoyeur de sortie,
(d) on avance le convoyeur principal et on transfère un deuxième produit sur ladite partie du convoyeur de sortie,
(e) simultanément, on transfère un autre produit qui se trouve sur le convoyeur d'amenée au convoyeur principal,
(f) puis on introduit un troisième produit dans la chambre de refroidissement au moyen du convoyeur d'amenée,
(g) puis on redémarre le refroidissement accéléré et on recommence le cycle.

Suivant un troisième aspect, le procédé suivant l'invention est un procédé de refroidissement, et se caractérise en ce qu'il comprend le cycle d'étapes suivantes :
(a) on réalise un refroidissement accéléré dans la chambre de refroidissement au moyen d'un fluide cryogénique, les deux portes étant fermées,
(b) quand un premier produit se trouvant dans la chambre de refroidissement devant l'ouverture de sortie a terminé son refroidissement, on arrête le refroidissement accéléré,
(c) on ouvre la porte de sortie,
(d) on sort ledit produit au moyen du convoyeur de sortie,
(e) on ferme la porte de sortie,
(f) on avance le dispositif convoyeur principal et on transfère un produit sur le convoyeur de sortie,
(g) simultanément, on transfère un produit qui se trouve sur le convoyeur d'amenée au convoyeur principal,
(h) on ouvre la porte d'entrée,
(i) on amène un produit dans la chambre de refroidissement par le convoyeur d'amenée,
(j) on ferme la portée d'entrée,
(k) on redémarre le refroidissement accéléré et on recommence le cycle.

L'invention sera mieux comprise à la lecture de la description qui va suivre, donnée uniquement à titre d'exemple et faite en se référant aux dessins annexés, sur lesquels :
- la Figure 1 est une vue schématique de dessus d'une installation de croûtage selon l'invention ;
- la Figure 2 est une vue de face de l'installation de la Figure 1 ;
- la Figure 2A représente à plus grande échelle le détail A de la Figure 2 ;
- les Figures 3A et 3B sont des vues schématiques d'un détail du système de convoyage auxiliaire, prises suivant la flèche III de la Figure 2 ;
- la Figure 4 est une vue schématique de face d'un second mode de réalisation; ce mode de réalisation n'est pas conforme à la présente invention ;
- la Figure 5 est une vue de droite de l'installation de la Figure 4 ; et
- la Figure 6 est une vue de dessus d'un troisième mode de réalisation de l'installation; ce mode de réalisation n'est pas conforme à la présente invention.

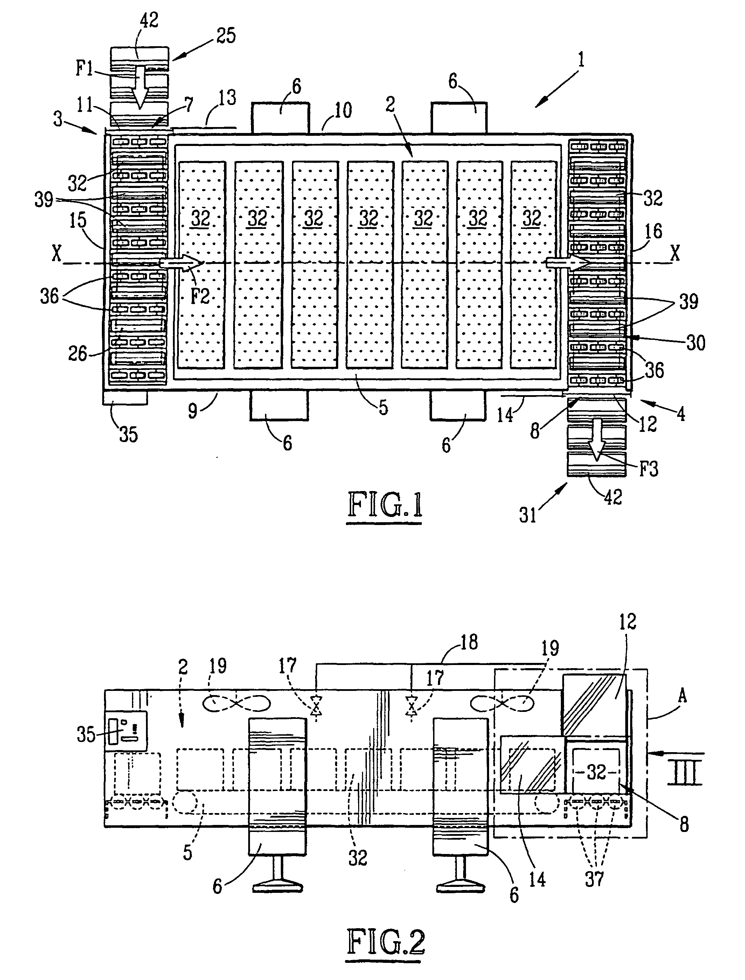

La Figure 1 montre une installation de croûtage 1 selon l'invention qui comporte une chambre de croûtage 2, deux convoyeurs auxiliaires, à savoir un convoyeur d'amenée 3 et un convoyeur de sortie 4, et un convoyeur principal 5. La chambre de croûtage est montée sur quatre montants 6. Elle comporte deux ouvertures respectivement d'entrée 7 et de sortie 8. Les deux ouvertures sont agencées dans les deux parois latérales 9, 10 opposées aux extrémités opposées de la chambre.

Il est à noter que les ouvertures peuvent, en variante, être agencées dans une même paroi latérale.

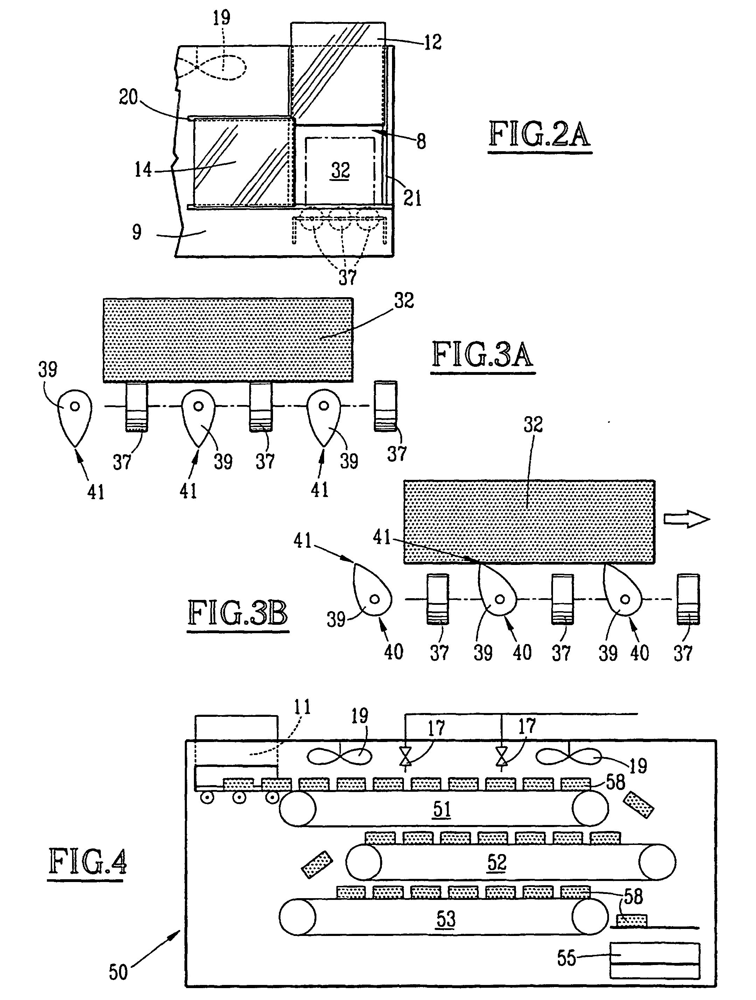

Chaque ouverture est munie d'une porte 11, 12 et d'un coulisseau 13. 14. Les parois d'extrémité 15, 16 de la chambre 2 sont pleines. Des buses de pulvérisation 17 se trouvent à l'intérieur de la chambre de croûtage (Figure 2). Elles sont reliées par des conduites d'alimentation 18 à une source d'azote liquide non représentée. Quatre ventilateurs 19 disposés au sommet de la chambre 2 assurent le brassage des gaz cryogéniques dans la chambre de croûtage 2.

Sur la Figure 2A on voit l'agencement de la porte de sortie 12 et du coulisseau 14 à plus grande échelle.

L'ouverture de sortie 8 est délimitée sur ses quatre côtés par la paroi latérale 9 de la chambre de croûtage 2. Le coulisseau 14 coulisse longitudinalement dans des rails de guidage 20 horizontaux, et permet ainsi le réglage de la largeur horizontale effective de l'ouverture de sortie 8 de la chambre de croûtage 2. La porte 12 coulisse verticalement dans des rails de guidage 21. Des garnitures d'étanchéité disposées entre les rails de guidage 20 et le coulisseau 14, respectivement entre les rails de guidage 21 et la porte 12, empêchent la perte des gaz froids à ces emplacements.

Le convoyeur d'amenée 3 comprend deux parties. La première partie 25 se trouve à l'extérieur de la chambre de croûtage 2 et s'étend jusque devant l'ouverture d'entrée 7. Cette première partie est constituée par un transporteur à rouleaux classique et présente une direction de convoyage unique indiquée par la flèche F1, perpendiculaire à l'axe général horizontal X-X de la chambre 2, qui définit la direction F2 du convoyeur principal 5. La deuxième partie 26 du convoyeur se trouve à l'intérieur de la chambre de croûtage 2 et présente deux directions de convoyage, la première direction F1 de convoyage étant identique à celle de la partie extérieure du convoyeur et la deuxième direction F2 de convoyage étant identique à celle du convoyeur principal. La première partie 25 et la deuxième partie 26 du convoyeur d'amenée 3 sont espacées l'une de l'autre afin de permettre l'obturation complète de l'ouverture d'entrée 7 par la porte 11 ou par le coulisseau 13. La construction de cette deuxième partie 26 du convoyeur sera décrite ci-dessous en regard des Figures 3A et 3B.

Le convoyeur principal 5 est entièrement disposé à l'intérieur de la chambre de croûtage 2. Ce convoyeur est un ensemble de convoyage classique par tapis métallique à maille en acier inoxydable dont l'entraînement est assuré par un moto-réducteur.

Le convoyeur de sortie 4 présente deux parties analogues à celle du convoyeur d'entrée 3. La première partie 30 est située à l'intérieur de la chambre de croûtage 2, à l'extrémité aval du convoyeur principal 5, et s'étend jusqu'à la porte de sortie 12. Cette partie comprend deux directions de convoyage perpendiculaires, la première direction étant identique à la direction de convoyage F2 du convoyeur principal 5 et la deuxième direction de convoyage F3 menant à l'ouverture de sortie 8 de la chambre de croûtage 2. La deuxième partie 31 du convoyeur de sortie 4, située à l'extérieur de la chambre de croûtage 2, raccorde l'installation 1 par exemple à un poste de tranchage.

Des produits à croûter 32 sont disposés à l'intérieur de la chambre de croûtage 2, deux des produits se trouvant sur les parties intérieures 26, 30 des convoyeurs auxiliaires.

La gestion de l'entraînement de tous les composants de l'installation est assurée par une unité de commande 35 pour mettre en oeuvre le cycle qui sera décrit plus loin.

Les Figures 3A et 3B montrent un détail de la partie 30 du convoyeur de sortie 4 située à l'intérieur de la chambre de croûtage 2. Ce convoyeur comporte des rangées 36 de trois galets 37 moteurs de convoyage coplanaires, rangées espacées l'une de l'autre. Les axes de rotation de ces galets 37 sont parallèles à la direction F3 de convoyage de sortie du convoyeur. Le plan de convoyage et la direction de convoyage F2 de ces galets 37 sont les mêmes que ceux du convoyeur principal 5. Une came 39 de convoyage est montée rotative entre chaque paire de rangées 36 de galets 37. L'axe de rotation de ces cames 39 se trouve à la même hauteur que l'axe de rotation des galets 37 et est perpendiculaire à celui-ci. La section transversale de chaque came 39 présente une région de repos 40 dont la distance à l'axe de rotation est inférieure à la distance entre l'axe de rotation et le plan de convoyage, et une région de convoyage 41 dont la distance à l'axe de rotation est supérieure à la distance entre l'axe de rotation et le plan de convoyage. La partie extérieure des convoyeurs auxiliaires 3, 4 est constituée de rouleaux 42 moteurs d'axes parallèles à l'axe X-X. Les cames 39, les galets 37 et les rouleaux 42 sont en matériau polyéthylène de haute densité.

Il est à noter que la section transversale des cames 39 peut comporter d'autres formes afin de les adapter à l'état de surface du produit à croûter. Elle peut aussi avoir un profil symétrique afin d'effectuer deux pas d'avancement par rotation. En outre, en variante, les cames 39 et galets 37 peuvent être agencés de telle façon que les cames 39 assurent le convoyage dans la direction principale F2 et que les galets 37 convoient dans la direction auxiliaire F1, F3.

Cette installation fonctionne de la façon suivante.

On part de la situation dans laquelle des produits à croûter 32 sont disposés sur le convoyeur principal 5 et un produit à croûter 32 est disposé sur chaque partie intérieure 26, 30 du convoyeur d'entrée 3 et de sortie 4. La largeur horizontale des ouvertures d'entrée 7 et de sortie 8 est réglée par les coulisseaux 13, 14 de telle façon qu'elle soit légèrement plus grande que la largeur transversale des produits à croûter 32. Les deux portes 11 , 12 sont fermées, les ventilateurs 19 ainsi que l'introduction de l'azote liquide sont arrêtés.

On commence alors le cycle de croûtage par l'introduction d'azote cryogénique par l'intermédiaire des conduites 18 et des buses 17 d'injection, et on démarre les quatre ventilateurs 19 pour le brassage et l'homogénéisation des gaz dans la chambre 2. Ceci a pour effet que le refroidissement des produits 32 est accéléré. Quand le premier produit 32, qui se trouve sur la partie intérieure 30 du convoyeur de sortie 4, est suffisamment croûté, on arrête l'introduction de l'azote (on peut également arrêter les ventilateurs 19), de sorte que le refroidissement est ralenti. Puis on ouvre la porte de sortie 12 jusqu'à un niveau légèrement supérieur à la hauteur du premier produit croûté 32. Ensuite, on entraîne les cames 39 de la partie intérieure 30 et les rouleaux 42 extérieurs du convoyeur de sortie. Ceci a pour effet que lorsque la région de convoyage 41 des cames 39 vient au-dessus du plan de convoyage des galets 37, le premier produit croûté 32 est déplacé d'une certaine longueur selon une trajectoire d'arc de cercle. Le produit croûté 32 est ainsi transporté par pas successifs jusqu'à la partie extérieure 31 du convoyeur de sortie, d'où il est convoyé de façon classique.

Il est à noter que l'espace situé entre la partie intérieure 30 du convoyeur et la partie extérieure du convoyeur est suffisamment petit pour que les produits croûtés 32 puissent le franchir.

Dès que le premier produit croûté 32 se trouve à l'extérieur de la chambre 2, on referme la porte de sortie 12 et on arrête l'entraînement des cames 39 dans leur position de repos, c'est-à-dire avec leur région de repos 40 dirigée vers le haut. Puis on entraîne simultanément les galets 37 des parties intérieure des convoyeurs d'entrée 3 et de sortie 4 et le convoyeur principal 5 jusqu'à ce qu'un deuxième produit 32 à croûter se trouve sur le convoyeur de sortie 4 et qu'un troisième produit 32 soit transféré du convoyeur d'entrée 3 au convoyeur principal 5. La position du deuxième produit 32 par rapport à l'ouverture de sortie 8 est réglée par le convoyeur de sortie 4 de telle façon qu'il puisse être extrait par le convoyage perpendiculaire (flèche F3) après le croûtage. Les convoyeurs 3, 4, 5 sont alors arrêtés. Puis on ouvre la porte d'entrée 11 jusqu'à un niveau légèrement supérieur à la hauteur du produit à introduire, et on introduit un quatrième produit (non représenté) à croûter par l'intermédiaire du convoyeur d'amenée 3. Le fonctionnement de convoyeur d'amenée 3 est analogue à celui du convoyeur de sortie 4. Quand le quatrième produit à croûter se trouve sur la partie intérieure 26 du convoyeur d'amenée, on referme la porte d'entrée 11. Le cycle de croûtage décrit plus haut recommence alors.

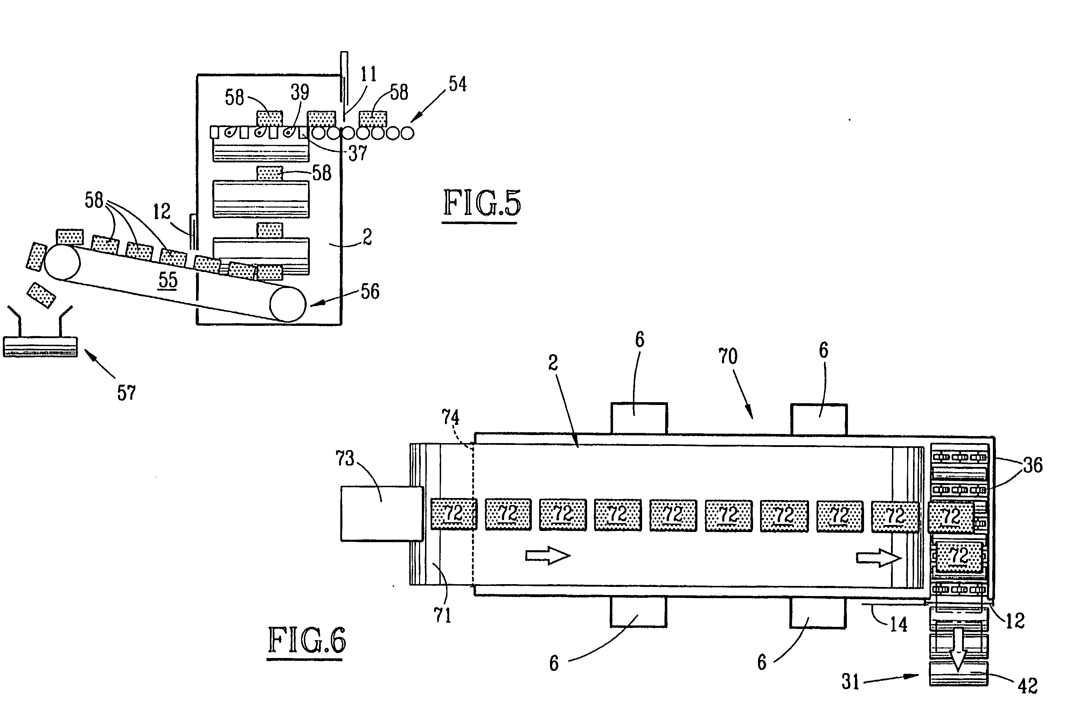

Les Figures 4 et 5 montrent un autre mode de réalisation; ce mode de réalisation, qui n'est pas conforme à l'invention est appliqué à la surgélation de produits alimentaires. Ci-après seront décrites seulement les différences par rapport au premier mode de réalisation. Cette installation de réfrigération 50 comporte à l'intérieur de la chambre de refroidissement trois tapis convoyeurs principaux 51, 52, 53 qui sont agencés l'un au-dessus de l'autre. De plus, chaque convoyeur est décalé horizontalement dans la direction de convoyage du convoyeur qui se trouve directement au-dessus. Le convoyeur d'amenée 54 est un convoyeur auxiliaire 3, 4 comme décrit dans le premier mode de réalisation. Le convoyeur de sortie 55 est un convoyeur ascendant à tapis classique qui s'étend jusqu'à l'extérieur de la chambre de refroidissement 2. L'extrémité 56 du convoyeur 55 située à l'intérieur de la chambre 2 se trouve à un niveau inférieur au niveau du convoyeur principal le plus bas 53. Ce convoyeur de sortie 55 mène à un poste d'emballage 54.

Ce mode de réalisation fonctionne de la façon suivante.

Le cycle de refroidissement est pour l'essentiel analogue à celui du premier mode de réalisation. Chaque fois qu'un premier produit 58 réfrigéré se trouve sur le convoyeur de sortie 55, on ouvre la porte de sortie 12, on le fait sortir. Simultanément, on avance les convoyeurs principaux 51, 52, 53 et le convoyeur d'entrée 54 jusqu'à ce qu'un deuxième produit 58 se trouve sur le convoyeur de sortie 56 et un troisième produit 58 qui s'est trouvé sur le convoyeur d'entrée se trouve sur le premier convoyeur principal 51. En même temps, les produits 58 qui sont placés à l'extrémité aval de chaque convoyeur principal tombent sur l'extrémité amont du convoyeur suivant.

Puis on referme la porte de sortie 12, on ouvre la porte d'entrée 11 et on fait entrer un quatrième produit 58 à refroidir. Enfin, la porte d'entrée 11 est fermée.

Dans cette variante, le refroidissement accéléré correspondant à l'injection d'azote liquide peut être soit discontinu comme précédemment, soit continu.

Sur la Figure 6, on voit un troisième mode de réalisation; ce mode de réalisation n'est pas conforme à l'invention.

Cette installation 70 ne comporte pas de convoyeur d'amenée latéral, par contre elle comporte un tapis convoyeur principal 71 en matériau polyester qui s'étend de l'extérieur à l'intérieur de la chambre de croûtage.

Sur le tapis 71 se trouvent des produits 72 pâteux ou semi-liquides qui ne peuvent pas être transférés d'un convoyeur à un autre avant la réfrigération ou le croûtage. Ces produits sont directement déposés sur le convoyeur principal après avoir été extrudés et tranchés par une extrudeuse 73, avant leur introduction dans la zone cryogénique.

Le cycle de réfrigération de cette installation est le suivant. On ouvre la porte de sortie 12 et on sort un produit réfrigéré, puis on ferme la porte de sortie 12, on ouvre la porte d'entrée 74 et on introduit un nouveau produit 72 à réfrigérer tout en transférant un produit 72 sur le convoyeur de sortie.

Il est à noter que les produits 72 sont déjà suffisamment rigides pour être transférés sur le convoyeur de sortie quand ils se trouvent à la fin du convoyeur principal 71.

L'agencement des convoyeurs à l'intérieur de la chambre de croûtage a comme avantage essentiel un encombrement moins important en longueur de l'ensemble de l'installation.

En outre, la perte de chaleur est diminuée du fait de la surface réduite des portes et de l'élimination de l'effet cheminée par l'actionnement séquentiel des portes.

Si les avantages significatifs de la configuration d'installation selon l'invention ont été tout particulièrement décrits dans ce qui précède pour le cas d'une installation de refroidissement de produits, notamment alimentaires, il apparaîtra clairement à l'homme du métier qu'ils auraient pu être également décrits dans le cas d'autres enceintes de traitement (à froid ou à chaud) qui comportent un convoyeur principal et des convoyeurs auxiliaires perpendiculaires, d'amenée et d'extraction des produits, comme c'est le cas de fours de brasage ou de traitement thermique.

## Revendications

1. Installation pour le traitement de produits, du type comprenant une chambre de traitement (2) comportant une ouverture d'entrée (7) et une ouverture de sortie (8), un dispositif convoyeur principal (5), qui présente une direction de convoyage principal (F2), ce dispositif convoyeur (5) étant situé sur au moins une partie de sa longueur à l'intérieur de la chambre de traitement (2), ainsi que deux convoyeurs auxiliaires, un convoyeur d'amenée (3) et un convoyeur de sortie (4), qui présentent tous deux une direction de convoyage auxiliaire perpendiculaire (F1, F3) à la direction de convoyage principale (F2), et qui se raccordent à une extrémité du dispositif convoyeur principal (5), leurs parties qui se raccordent aux extrémités du convoyeur principal (5) étant toutes deux situées à l'intérieur de la chambre de traitement (2),
caractérisée en ce chacun desdits convoyeurs auxiliaires (3, 4) comporte, dans sa partie située à l'intérieur (26, 30) de la chambre de traitement (2), un dispositif à deux directions de transport perpendiculaires comportant des galets (37) formant un plan de convoyage selon la direction de convoyage principal (F2) et des cames (39) intercalées entre les galets (37), ces cames (39) présentant des axes de rotation perpendiculaires à ceux des galets (37) et une section transversale qui est telle que la distance entre l'axe de rotation et au moins un point de la surface de la came (39) est inférieure à la distance entre l'axe de rotation et ledit plan de convoyage et la distance entre l'axe de rotation et au moins un autre point de la surface de la came (39) est supérieure à la distance entre l'axe de rotation et le plan de convoyage, en ce que chacune des ouvertures d'entrée (7) et de sortie (8) comporte une porte (11, 12), l'installation comprenant des moyens d'actionnement séquentiel des portes, aptes à permettre la séquence suivante :
- quand un produit (32) se trouvant dans la chambre de traitement (2) devant l'ouverture de sortie (8) a terminé son traitement, on sort le produit (32) de la chambre (2) de traitement,
- ensuite, on fait avancer d'un cran les produits (32) restant dans la chambre, et on introduit un nouveau produit à traiter dans la chambre de traitement (2), par l'ouverture d'entrée (7).

2. Installation selon la revendication 1, **caractérisée en ce que** les cames (39) et/ou les galets (37) sont en matériau polyéthylène de haute densité.

3. Installation selon l'une des revendications 1 ou 2, **caractérisée en ce que** l'ouverture d'entrée (7) ou de sortie (8) correspondant au(x)dit(s) convoyeur(s) auxiliaire(s) présente un contour légèrement plus grand et similaire à la section des produits (32) dans la direction de convoyage auxiliaire (F1, F3) correspondante.

4. Installation selon l'une des revendications 1 à 3, **caractérisée en ce que** la chambre de traitement (2) comporte des moyens d'adaptation (13, 14) du contour de l'ouverture d'entrée (7) ou de sortie (8) à la section des produits (32)dans la direction de convoyage auxiliaire (F1, F3) correspondante.

5. Installation selon l'une quelconque des revendications 1 à 4, **caractérisée en ce que** la chambre de traitement est une chambre de refroidissement.

6. Installation selon l'une quelconque des revendications 1 à 5, **caractérisée en ce que** la chambre de traitement est une chambre de croûtage.

7. Installation selon l'une quelconque des revendications 1 à 4, **caractérisée en ce que** la chambre de traitement est une enceinte de traitement thermique.

8. Installation selon l'une quelconque des revendications 1 à 7, **caractérisée en ce que** la chambre de traitement est une enceinte de traitement de produits alimentaires.

9. Procédé de traitement de produits en utilisant une installation selon l'une des revendications 1 à 6, **caractérisé en ce que** le traitement réalisé est un refroidissement, et **en ce qu'**il comprend le cycle d'étapes suivant :
(a) on réalise un refroidissement accéléré dans la chambre de refroidissement (2) au moyen d'un fluide cryogénique,
(b) quand un premier produit (32) se trouvant dans la chambre de refroidissement (2) devant l'ouverture de sortie (8) a terminé son refroidissement, on arrête le refroidissement accéléré et on sort le premier produit (32) de la chambre (2) de refroidissement,
(c) ensuite, on fait avancer d'un cran les produits (32) restant dans la chambre, et on introduit un deuxième produit à refroidir dans la chambre de refroidissement (2), par l'ouverture d'entrée (7),
(d) on redémarre le refroidissement accéléré, et,
(e) on recommence le cycle de refroidissement.

10. Procédé de traitement de produits en utilisant une installation selon l'une des revendications 1 à 6, **caractérisé en ce que** le traitement réalisé est un refroidissement, et **en ce qu'**il comprend le cycle d'étapes suivantes :
(a) on réalise un refroidissement accéléré dans la chambre de refroidissement (2) au moyen d'un fluide cryogénique,
(b) quand le produit (32) qui se trouve sur ladite partie du convoyeur de sortie (4) a terminé son refroidissement, on arrête le refroidissement accéléré,
(c) on sort ce produit au moyen du convoyeur de sortie (4),
(d) on avance le convoyeur principal (5) et on transfère un deuxième produit (32) sur ladite partie du convoyeur de sortie (4),
(e) simultanément, on transfère un autre produit qui se trouve sur le convoyeur d'amenée (3) au convoyeur principal (5),
(f) puis on introduit un troisième produit dans la chambre de refroidissement (2) au moyen du convoyeur d'amenée (3),
(g) puis on redémarre le refroidissement accéléré et on recommence le cycle.

11. Procédé de traitement de produits en utilisant une installation selon l'une des revendications 1 à 6, caractérisé en ce en ce que le traitement réalisé est un refroidissement et en ce qu'il comprend le cycle d'étapes suivantes :
(a) on réalise un refroidissement accéléré dans la chambre de refroidissement (2) au moyen d'un fluide cryogénique, les deux portes (11, 12) étant fermées,
(b) quand un premier produit (32) se trouvant dans la chambre de refroidissement (2) devant l'ouverture de sortie (8) a terminé son refroidissement, on arrête le refroidissement accéléré,
(c) on ouvre la porte de sortie (12),
(d) on sort ledit produit (32) au moyen du convoyeur de sortie (4),
(e) on ferme la porte de sortie (12),
(f) on avance le dispositif convoyeur principal (5) et on transfère un produit sur le convoyeur de sortie (4),
(g) simultanément, on transfère un produit qui se trouve sur le convoyeur d'amenée (3) au convoyeur principal (5),
(h) on ouvre la porte d'entrée (11),
(i) on amène un produit dans la chambre de refroidissement (2) par le convoyeur d'amenée (3),
(j) on ferme la portée d'entrée (11),
(k) on redémarre le refroidissement accéléré et on recommence le cycle.

## Claims

1. Installation for treating products, of the type comprising a treatment chamber (2) which has an admission opening (7) and a discharge opening (8), a main conveyor device (5) which has a main direction of conveying (F2), this conveyor device (5) being situated over at least part of its length inside the treatment chamber (2), and also two auxiliary conveyors, namely an intake conveyor (3) and a discharge conveyor (4), which both have an auxiliary direction of conveying (F1, F3) perpendicular to the main direction of conveying (F2), and which are connected to an end of the main conveyor device (5), their parts connected to the ends of the main conveyor (5) being both situated inside the treatment chamber (2),
**characterized in that** each of said auxiliary conveyors (3, 4) comprises, in its part (26, 30) situated inside the treatment chamber (2), a device with two perpendicular directions of transport which comprises rollers (37) forming a conveying plane in the main direction of conveying (F2), and cams (39) interposed between the rollers (37), these cams (39) having axes of rotation perpendicular to those of the rollers (37) and a cross section which is such that the distance between the axis of rotation and at least one point of the surface of the cam (39) is less than the distance between the axis of rotation and said conveying plane and the distance between the axis of rotation and at least one other point of the surface of the cam (39) is greater than the distance between the axis of rotation and the conveying plane, and **in that** each of the admission (7) and discharge (8) openings comprises a gate (11, 12), the installation comprising means for sequential actuation of the gates and able to permit the following sequence:
- when a product (32) situated in the treatment chamber (2) in front of the discharge opening (8) has finished its treatment, the product (32) is removed from the treatment chamber (2),
- then the products (32) remaining in the chamber are advanced by one step, and a new product to be treated is introduced into the treatment chamber (2) via the admission opening (7).

2. Installation according to Claim 1, **characterized in that** the cams (39) and/or the rollers (37) are made of high-density polyethylene.

3. Installation according to either of Claims 1 and 2, **characterized in that** the admission opening (7) or discharge opening (8) corresponding to said auxiliary conveyor(s) has a contour which is slightly larger than and similar to the cross section of the products (32) in the corresponding auxiliary direction of conveying (F1, F3).

4. Installation according to one of Claims 1 to 3, **characterized in that** the treatment chamber (2) comprises means (13, 14) for adapting the contour of the admission opening (7) or discharge opening (8) to the cross section of the products (32) in the corresponding auxiliary direction of conveying (F1, F3).

5. Installation according to any one of Claims 1 to 4, **characterized in that** the treatment chamber is a cooling chamber.

6. Installation according to any one of Claims 1 to 5, **characterized in that** the treatment chamber is a crust freezing chamber.

7. Installation according to any one of Claims 1 to 4, **characterized in that** the treatment chamber is a heat treatment cell.

8. Installation according to any one of Claims 1 to 7, **characterized in that** the treatment chamber is a cell for treatment of food products.

9. Method for treating products using an installation according to one of Claims 1 to 6, **characterized in that** the treatment carried out is a cooling treatment, and **in that** it comprises the following cycle of steps:
(a) accelerated cooling is carried out in the cooling chamber (2) by means of a cryogenic fluid,
(b) when a first product (32) "situated in the cooling chamber (2) in front of the discharge opening (8) has finished its cooling, the accelerated cooling is stopped and the first product (32) is removed from the cooling chamber (2),
(c) then the products (32) remaining in the chamber are advanced by one step, and a second product to be cooled is introduced into the cooling chamber (2) via the admission opening (7),
(d) the accelerated cooling is restarted, and
(e) the cooling cycle recommences.

10. Method for treating products using an installation according to one of Claims 1 to 6, **characterized in that** the treatment carried out is a cooling treatment, and **in that** it comprises the cycle of following steps:
(a) accelerated cooling is carried out in the cooling chamber (2) by means of a cryogenic fluid,
(b) when the product (32) situated on said part of the discharge conveyor (4) has finished its cooling, the accelerated cooling is stopped,
(c) this product is removed by means of the discharge conveyor (4),
(d) the main conveyor (5) is advanced, and a second product (32) is transferred onto said part of the discharge conveyor (4),
(e) simultaneously, another product which is situated on the intake conveyor (3) is transferred to the main conveyor (5),
(f) then a third product is introduced into the cooling chamber (2) by means of the intake conveyor (3),
(g) then the accelerated cooling is restarted, and the cycle recommences.

11. Method for treating products using an installation according to one of Claims 1 to 6, **characterized in that** the treatment carried out is a cooling treatment and **in that** it comprises the cycle of following steps:
(a) accelerated cooling is carried out in the cooling chamber (2) by means of a cryogenic fluid, the two gates (11, 12) being closed,
(b) when a first product (32) situated in the cooling chamber (2) in front of the discharge opening (8) has finished its cooling, the accelerated cooling is stopped,
(c) the discharge gate (12) is opened,
(d) said product (32) is removed by means of the discharge conveyor (4),
(e) the discharge gate (12) is closed,
(f) the main conveyor device (5) is advanced and a product is transferred onto the discharge conveyor (4),
(g) simultaneously, a product which is situated on the intake conveyor (3) is transferred to the main conveyor (5),
(h) the admission gate (11) is opened,
(i) a product is introduced into the cooling chamber (2) by the intake conveyor (3),
(j) the admission gate (11) is closed,
(k) the accelerated cooling is restarted, and the cycle recommences.

## Patentansprüche

1. Anlage zur Behandlung von Produkten, wobei die Anlage von der Art ist mit einer Behandlungskammer (2), die eine Eintrittöffnung (7) und eine Austrittsöffnung (8) umfasst, mit einer Hauptfördervorrichtung (5), die eine Hauptförderrichtung (F2) aufweist, wobei sich diese Fördervorrichtung (5) auf zumindest einem Teil ihrer Länge im Inneren der Behandlungskammer (2) befindet, sowie mit zwei Hilfsfördereinrichtungen, einer Zulieferungsfördereinrichtung (3) und einer Austrittsfördereinrichtung (4), die beide eine zu der Hauptförderrichtung (F2) senkrechte Hilfsförderrichtung (F1, F3) aufweisen und die an einem Ende der Hauptfördervorrichtung (5) anschließen, wobei ihre Enden, die an die Hauptfördervorrichtung (5) anschließen, beide im Innern der Behandlungskammer (2) liegen,
**dadurch gekennzeichnet, dass** jede der Hilfsfördereinrichtungen (3, 4) an ihrem im Innern (26, 30) der Behandlungskammer (2) liegenden Abschnitt eine Vorrichtung zum Transport in zwei senkrechte Richtungen umfasst, die Rollen (37), die eine Förderebene entsprechend der Hauptförderrichtung (F2) bilden, und zwischen die Rollen (37) eingeschobene Exzenter (39) umfasst, wobei diese Exzenter (39) Drehachsen, die zu denjenigen der Rollen (37) senkrecht liegen, und einen Querschnitt aufweisen, der so aussieht, dass der Abstand zwischen der Drehachse und zumindest einem Punkt der Oberfläche des Exzenters (39) kleiner als der Abstand zwischen der Drehachse und der Förderebene und der Abstand zwischen der Drehachse und zumindest einem anderen Punkt der Oberfläche des Exzenters (39) größer als der Abstand zwischen der Drehachse und der Förderebene ist, dass jede der Eintritts- (7) und Austrittsöffnungen (8) eine Tür (11, 12) umfasst, wobei die Anlage Mittel zur aufeinanderfolgenden Betätigung der Türen aufweist, die folgende Abfolge gestatten können:
- wenn ein sich in der Behandlungskammer (2) vor der Austrittsöffnung (8) befindendes Produkt (32) seine Behandlung beendet hat, lässt man das Produkt (32) aus der Behandlungskammer (2) austreten,
- man lässt dann die in der Kammer bleibenden Produkte (32) sich um eine Stufe vorbewegen und führt durch die Eintrittsöffnung (7) ein neues zu behandelndes Produkt in die Behandlungskammer (2) ein.

2. Anlage nach Anspruch 1, **dadurch gekennzeichnet, dass** die Exzenter (39) und/oder die Rollen (37) aus hochdichtem Polyethylen-Material bestehen.

3. Anlage nach einem der Ansprüche 1 oder 2, **dadurch gekennzeichnet, dass** die Eintritts- (7) oder Austrittsöffnung (8), die der (bzw. den) Hilfsfördereinrichtung(en) entspricht, einen geringfügig größeren Umriss aufweist, der dem Querschnitt der Produkte (32) in Richtung der entsprechenden Hilfsförderrichtung (F1, F3) ähnlich ist.

4. Anlage nach einem der Ansprüche 1 bis 3, **dadurch gekennzeichnet, dass** die Behandlungskammer (2) Mittel zur Anpassung (13, 14) des Umrisses der Eintritts- (7) oder Austrittsöffnung (8) an den Querschnitt der Produkte (32) in Richtung der entsprechenden Hilfsförderrichtung (F1, F3) umfasst.

5. Anlage nach einem der Ansprüche 1 bis 4, **dadurch gekennzeichnet, dass** die Behandlungskammer eine Kühlkammer ist.

6. Anlage nach einem der Ansprüche 1 bis 5, **dadurch gekennzeichnet, dass** die Behandlungskammer eine Kammer zur Krustenbildung ist.

7. Anlage nach einem der Ansprüche 1 bis 4, **dadurch gekennzeichnet, dass** die Behandlungskammer ein abgeschlossener Bereich zur Wärmebehandlung ist.

8. Anlage nach einem der Ansprüche 1 bis 7, **dadurch gekennzeichnet, dass** die Behandlungskammer ein abgeschlossener Bereich zur Behandlung von Nahrungsmitteln ist.

9. Verfahren zur Behandlung von Produkten durch Verwendung einer Anlage nach einem der Ansprüche 1 bis 6, **dadurch gekennzeichnet, dass** die durchgeführte Behandlung eine Kühlung ist und dass sie den folgenden Zyklus von Schritten umfasst:
(a) man führt in der Kühlkammer (2) eine beschleunigte Kühlung mit einem Tiefsttemperaturfluid aus,
(b) wenn ein sich in der Kühlkammer (2) vor der Austrittsöffnung (8) befindendes erstes Produkt (32) seine Kühlung beendet hat, wird das beschleunigte Kühlen unterbrochen, und man lässt das erste Produkt (32) aus der Kühlkammer (2) austreten,
(c) dann lässt man die in der Kammer bleibenden Produkte (32) sich um eine Stufe vorbewegen und führt ein zweites zu kühlendes Produkt in die Kühlkammer (2) durch die Eintrittsöffnung (7) ein,
(d) das beschleunigte Kühlen wird wieder angefahren und
(e) der Kühlzyklus beginnt von neuem.

10. Verfahren zur Behandlung von Produkten durch Verwendung einer Anlage nach einem der Ansprüche 1 bis 6, **dadurch gekennzeichnet, dass** die durchgeführte Behandlung eine Kühlung ist und dass sie den folgenden Zyklus von Schritten umfasst:
(a) man führt in der Kühlkammer (2) eine beschleunigte Kühlung mit einem Tiefsttemperaturfluid aus,
(b) wenn das sich auf dem Abschnitt der Austrittsfördereinrichtung (4) befindende Produkt (32) seine Kühlung beendet hat, wird das beschleunigte Kühlen unterbrochen,
(c) man lässt dieses Produkt mittels der Austrittsfördereinrichtung (4) austreten,
(d) die Hauptfördervorrichtung (5) wird vorbewegt und ein zweites Produkt (32) wird auf den Abschnitt der Austrittsfördereinrichtung (4) übertragen,
(e) gleichzeitig wird ein anderes Produkt, das sich auf der Zulieferungsfördereinrichtung (3) befindet, auf die Hauptfördervorrichtung (5) übertragen,
(f) dann wird ein drittes Produkt durch die Zulieferungsfördereinrichtung (3) in die Kühlkammer (2) eingeführt,
(g) dann wird das beschleunigte Kühlen wieder angefahren und der Zyklus beginnt von neuem.

11. Verfahren zur Behandlung von Produkten durch Verwendung einer Anlage nach einem der Ansprüche 1 bis 6, **dadurch gekennzeichnet, dass** die durchgeführte Behandlung eine Kühlung ist und dass sie den folgenden Zyklus von Schritten umfasst:
(a) man führt in der Kühlkammer (2) eine beschleunigte Kühlung mit einem Tiefsttemperaturfluid aus, während die zwei Türen (11, 12) geschlossen sind,
(b) wenn ein sich in der Kühlkammer (2) vor der Austrittsöffnung (8) befindendes erstes Produkt (32) seine Kühlung beendet hat, wird das beschleunigte Kühlen unterbrochen,
(c) die Ausgangstür (12) wird geöffnet,
(d) man lässt das Produkt (32) mittels der Austrittsfördereinrichtung (4) austreten,
(e) die Ausgangstür (12) wird geschlossen,
(f) die Hauptfördervorrichtung (5) wird vorbewegt und ein Produkt (32) wird auf die Austrittsfördereinrichtung (4) übertragen,
(g) gleichzeitig wird ein Produkt, das sich auf der Zulieferungsfördereinrichtung (3) befindet, auf die Hauptfördervorrichtung (5) übertragen,
(h) die Eintrittstür (11) wird geöffnet,
(i) das Produkt wird durch die Zulieferungsfördereinrichtung (3) in die Kühlkammer (2) gebracht,
(j) die Eintrittstür (11) wird geschlossen,
(k) das beschleunigte Kühlen wird wieder angefahren und der Zyklus beginnt von neuem.
